# EUROPÄISCHE PATENTANMELDUNG

(11) **EP 4 491 925 A1**
(43) Veröffentlichungstag der Anmeldung: **15.01.2025**
(21) Anmeldenummer: 24187617.6
(22) Anmeldetag: 10.07.2024
(51) Int. Cl.: F16L 9/02, F17C 1/00, B32B 1/08, B32B 15/08, B32B 15/18, B32B 27/06, B32B 1/00

(54) **DRUCKBEHÄLTER**

(30) Priorität: 14.07.2023 DE 102023118746
(71) Anmelder: eurocylinder systems AG, 99510 Apolda (DE); Fraunhofer-Gesellschaft zur Förderung der angewandten Forschung e.V., 80686 München (DE); Galvanotechnik Jens Holzapfel GmbH, 99887 Georgenthal (DE); Kersten Kunststoffcoating GmbH, 07768 Kahla (DE)
(72) Erfinder: STAPS, Dr. Katrin, 07646 Tröbnitz (DE); WYRWA, Dr. Ralf, 07751 Rothenstein (DE); HOYER, Dr. Thomas, 99438 Bad Berka OT Tannroda (DE); HOLZAPFEL, Jens, 99887 Georgenthal (DE); SCHROEDER, Jos, 7331 AM Apeldoorn (NL)
(74) Vertreter: Liedtke & Partner Patentanwälte

(57) **Zusammenfassung**

Die Erfindung betrifft einen Druckbehälter, aufweisend eine Wandung (1) aus Stahl, wobei die Wandung (1) des Druckbehälters in dessen Innerem mit einer oder mehreren unterschiedlichen Schichten (MS, PS, PMKS, POKS), insbesondere zwei, drei, vier oder mehr Schichten (MS, PS, PMKS, POKS) zur Verringerung von Wasserstoffdiffusion und/oder zur Vermeidung des direkten Kontaktes eines im Druckbehälter zu haltenden Gases zur Wandung aus Stahl versehen ist. Die Erfindung betrifft ferner ein Verfahren zur Herstellung des Druckbehälters.

## Beschreibung

Die Erfindung betrifft einen Druckbehälter für die Aufbewahrung von Wasserstoff.

Es ist bekannt, dass vor allem hohe Wasserstoffdrücke zur Versprödung insbesondere von gehärteten Stählen führen, was zum Bersten des Druckbehälters führen kann. Als ein wahrscheinlicher Mechanismus wird die Diffusion atomaren Wasserstoffs von der Metalloberfläche in den Stahl diskutiert. Durch Rekombination zum molekularen Wasserstoff im Metallgitter wird das Metallgefüge gestört und es kommt zur Versprödung.

Dadurch, dass sich die Druckbehälter beim Befüllen in der Länge ausdehnen und beim Entleeren wieder zusammenziehen, kommt es zusätzlich zu einer starken mechanischen Belastung des Materials, wodurch nicht ausreichend duktile Materialien reißen oder abplatzen können.

Ausgehend von bestehenden Regularien zur Auslegung von Behältern zur Verwendung mit Wasserstoff ist der Höchstwert der Zugfestigkeit auf 950 MPa begrenzt, was eine dickere Mindestwanddicke bei gleichen Druckstufen gegenüber Speichern zur Verwendung mit nicht versprödend wirkenden Gasen zur Folge hat. Zur Vermeidung einer vorzeitigen wasserstoffinduzierten Materialermüdung müsste die Wandstärke der Flaschen demnach erhöht werden. Jedoch sind dafür die Einsatzmengen an Stahl sehr hoch und das Gewicht der Flaschen nimmt enorm zu.

Derzeit erhältliche Typ I-Hochdruckstahlflaschen zur Speicherung von Wasserstoff sind aufgrund der Gefahr der Wasserstoffversprödung des Stahls begrenzt auf eine Zugfestigkeit von 950 N/mm². Dadurch ergibt sich eine gegenüber Druckbehältern zur Verwendung anderer gasförmiger und unter Druck verflüssigter Gase eine vergleichsweise hohe Wanddicke, einhergehend mit dementsprechend hohem Gewicht der Behälter.

Weiterhin sind aufgrund der Materialmenge die Fertigungsprozesse Umformen und Wärmebehandlung vergleichsweise energieintensiv und der Materialverbrauch des Stahlhalbzeuges entsprechend höher (Faktor 2).

Zudem sind bestehende Speichersysteme für die Anwendung mit einem Betriebsdruck von 300 bar ausgestattet. Aktuelle Entwicklungen nachhaltiger und ressourcenschonender, regenerativer Energiesysteme auf Wasserstoffbasis erfordern deutliche höhere Druckstufen (üblich 350 bar, 500 bar, 750 bar, 1000 bar), z. B. bei der Anwendung von Speicheranlagen in Wasserstofftankstellen oder Elektrolysepuffern.

Nachteilig an den bekannten Druckspeichersystemen aus Stahl zur Verwendung mit Wasserstoff ist insbesondere die begrenzte maximale Zugfestigkeit und die daraus resultierende hohe Mindestwanddicke sowie das resultierende Gewicht der Speicher. Bei kohlefaserummantelten Kunststoff-Linern (Typ IV-Zylindern) kann das Problem einer hohen Wasserstoffdiffusion durch die Zylinderwand bestehen.

In den Branchen wie Elektromobilität (Brennstoffzelle), Wasserstoffverbrenner sowie Energiespeicherung aus der Wasserelektrolyse besteht daher ein dringender Bedarf an geeigneten Möglichkeiten zur verlustfreien Speicherung von Wasserstoff.

Der Erfindung liegt die Aufgabe zu Grunde, einen neuartigen Druckbehälter sowie ein neuartiges Verfahren zur Herstellung eines Druckbehälters anzugeben.

Die Aufgabe wird erfindungsgemäß gelöst durch einen Druckbehälter mit den Merkmalen des Anspruchs 1 und durch ein Verfahren mit den Merkmalen des Anspruchs 10.

Vorteilhafte Ausgestaltungen der Erfindung sind Gegenstand der Unteransprüche.

Ein erfindungsgemäßer Druckbehälter weist eine Wandung aus Stahl, beispielsweise hochlegiertem Stahl, auf, wobei die Wandung des Druckbehälters in dessen Innerem mit einer oder mehreren unterschiedlichen Schichten, insbesondere zwei, drei, vier oder mehr Schichten zur Verringerung von Wasserstoffdiffusion und/oder Vermeidung des direkten Kontaktes eines im Druckbehälter zu haltenden Gases zur Wandung aus Stahl versehen ist.

Der Druckbehälter kann eine Gasflasche oder eine Rohrleitung sein.

Gemäß einer Ausführungsform umfasst/umfassen die eine oder mehrere Schichten eine Metallschicht oder Halbmetallschicht und/oder eine Polymerschicht und/oder eine Polymer-Metall-Kompositschicht und/oder eine Polymer-Oxid-Kompositschicht und/oder eine Metall-Oxid-Schicht. Das Oxid stellt dabei eine Verbindung aus einem Metall und/oder Halbmetall mit Sauerstoff dar.

In einer Ausführungsform weist die Metallschicht oder Halbmetallschicht ein Metall und/oder ein Halbmetall auf. Alternativ kann die Metallschicht oder Halbmetallschicht eine Metalllegierung beziehungsweise Halbmetalllegierung sein. Insbesondere kann die Metallschicht oder Halbmetallschicht mindestens einen der Stoffe Silber, Aluminium, Gold, Germanium, Kupfer, Molybdän, Wolfram, Platin und Nickel umfassen.

In einer Ausführungsform liegt eine Schichtdicke der Metallschicht im Bereich von 50 nm bis 500 µm, bevorzugt im Bereich von 100 nm bis 400 µm und besonders bevorzugt im Bereich von 120 nm bis 250 µm. Die Schichtdicke der Metallschicht kann jedoch auch kleiner als 20 µm oder größer als 200 µm sein.

In einer Ausführungsform weist die Polymerschicht ein Polyamid und/oder ein Polyethylenterephthalat und/oder ein HD-Polyethylen (auch High-Density-Polyethylen oder Polyethelyn hoher Dichte genannt) und/oder ein Polyvinylchlorid und/oder ein Polyvinylfluorid und/oder ein Polyvinylidendifluorid und/oder ein Polychlortrifluorethylen und/oder Parylen und/oder ein Polyphenylensulfid und/oder ein Polypyrrol und/oder ein Fluorelastomer und/oder Epoxidharz und/oder Polyurethan und /oder ein thiolbasiertes System auf.

In einer Ausführungsform liegt eine Schichtdicke der Polymerschicht im Bereich von 50 µm bis 5 mm, bevorzugt im Bereich von 0,25 mm bis 4 mm und besonders bevorzugt im Bereich von 0,5 mm bis 2 mm.

In einer Ausführungsform ist die Polymer-Metall-Kompositschicht aus mindestens einem Polymer, insbesondere dem mindestens einen in der Polymerschicht verwendeten Polymer, und einem Metall oder Halbmetall oder einer Metalllegierung oder Halbmetalllegierung, insbesondere dem mindestens einen in der Metallschicht verwendeten Metall oder Halbmetall, gebildet.

In einer Ausführungsform ist die Polymer-Oxid-Kompositschicht aus mindestens einem Polymer, insbesondere dem mindestens einen in der Polymerschicht verwendeten Polymer, und einem oxidischen Material, beispielsweise Glas, Keramik, Metalloxid und/oder Glimmer, gebildet.

Ferner kann in der Polymerschicht und/oder der Polymer-Metall-Kompositschicht und/oder der Polymer-Oxid-Kompositschicht auch mindestens ein Additiv enthalten sein, beispielsweise ein Weichmacher.

In einer Ausführungsform liegen anorganische Komponenten in der Polymer-Metall-Kompositschicht und/oder der Polymer-Oxid-Kompositschicht mit einem Anteil im Bereich von 5 Ma.% bis 85 Ma.%, bevorzugt im Bereich von 20 Ma.% bis 80 Ma.% und besonders bevorzugt im Bereich von 40 Ma.% bis 80 Ma.%, vor.

In einer Ausführungsform liegen/liegt das Metall und/oder Halbmetall und/oder das Oxid als Partikel mit einer plättchenförmigen Struktur mit nano- bis mikrometergroßen Abmessungen, insbesondere mit Partikelgrößen im Bereich von 30 nm bis 100 µm, bevorzugt im Bereich von 100 nm bis 80 µm und besonders bevorzugt im Bereich von 0,5 µm bis 60 µm, vor. Die Partikelgröße kann beispielweise mittels Photosedimentation, elektrischer Mobilitätsanalyse, Kondensationskernzählung, Impaktionsabscheidung, Laserbeugung, Schalldämpfungsspektroskopie, Siebanalyse, Lichtmikroskopie, dynamischer Lichtstreuung oder Ultraschalldämpfungsspektroskopie bestimmt werden.

In einer Ausführungsform sind die Schichten in einer der folgenden Reihenfolgen auf der Wandung angeordnet, wobei die Metallschicht auch eine Halbmetallschicht sein kann:
- Metallschicht, Polymerschicht, Polymer-Metall-Kompositschicht, Polymer-Oxid-Kompositschicht,
- Metallschicht, Polymerschicht, Polymer-Oxid-Kompositschicht, Polymer-Metall-Kompositschicht,
- Metallschicht, Polymer-Metall-Kompositschicht, Polymerschicht, Polymer-Oxid-Kompositschicht,
- Metallschicht, Polymer-Metall-Kompositschicht, Polymer-Oxid-Kompositschicht, Polymerschicht,
- Metallschicht, Polymer-Oxid-Kompositschicht, Polymerschicht, Polymer-Metall-Kompositschicht,
- Metallschicht, Polymer-Oxid-Kompositschicht, Polymer-Metall-Kompositschicht, Polymerschicht,
- Metallschicht, Polymerschicht, Polymer-Oxid-Kompositschicht,
- Metallschicht, Polymer-Oxid-Kompositschicht, Polymerschicht,
- Metallschicht, Polymer-Metall-Kompositschicht, Polymer-Oxid-Kompositschicht,
- Metallschicht, Polymer-Oxid-Kompositschicht, Polymer-Metall-Kompositschicht,
- Metallschicht, Polymer-Metall-Kompositschicht.

Eine andere Reihenfolge und Anzahl der Schichten sind jedoch nicht ausgeschlossen.

In einer Ausführungsform kann vorgesehen sein, dass der Druckbehälter keine Faserverbundwerkstoffe aufweist.

Gemäß einem Aspekt der vorliegenden Erfindung wird ein Verfahren zur Herstellung eines Druckbehälters wie oben beschrieben vorgeschlagen, wobei der Druckbehälter aus Stahl geformt und in seinem Inneren mit einer oder mehreren unterschiedlichen Schichten, insbesondere zwei, drei, vier oder mehr Schichten, versehen wird. Vor Aufbringung einer oder mehrerer der Schichten kann jeweils ein geeigneter Primer aufgebracht werden, damit die jeweilige Schicht an der Wandung oder an der jeweils vorhergehenden Schicht haftet oder deren Haftung verbessert wird.

In einer Ausführungsform wird der Druckbehälter nahtlos oder durch Schweißen gefertigt.

In einer Ausführungsform umfasst/umfassen die eine oder mehrere Schichten eine Metallschicht oder Halbmetallschicht und/oder eine Polymerschicht und/oder eine Polymer-Metall-Kompositschicht und/oder eine Polymer-Oxid-Kompositschicht.

In einer Ausführungsform wird die Metallschicht oder Halbmetallschicht aus mindestens einem Metall und/oder mindestens einem Halbmetall, insbesondere umfassend mindestens einen der Stoffe Silber, Aluminium, Gold, Germanium, Kupfer, Molybdän, Wolfram, Platin und Nickel, gebildet.

In einer Ausführungsform wird die Metallschicht oder Halbmetallschicht mittels eines elektrochemischen Verfahrens, eines Plasmaverfahrens, eines Sputterverfahrens oder eines stromlosen chemischen Verfahrens, insbesondere Versilberung oder chemisch Nickel, oder aus einer Metallschmelze abgeschieden. In einer Ausführungsform ist das Plasmaverfahren kein Niederdruckplasmaverfahren mit Verwendung von HMDSO als Precursor.

In einer Ausführungsform wird die Polymerschicht durch mindestens ein Polymer, umfassend ein Polyamid und/oder ein Polyethylenterephthalat und/oder ein HD-Polyethylen und/oder ein Polyvinylchlorid und/oder ein Polyvinylfluorid und/oder ein Polyvinylidendifluorid und/oder ein Polychlortrifluorethylen und/oder Parylen und/oder ein Polyphenylensulfid und/oder ein Polypyrrol und/oder ein Fluorelastomer und/oder Epoxidharz und/oder Polyurethan und/oder ein thiolbasiertes System, gebildet.

In einer Ausführungsform wird die Polymer-Metall-Kompositschicht aus mindestens einem Polymer, insbesondere dem mindestens einen in der Polymerschicht verwendeten Polymer, und einem Metall und/oder Halbmetall oder einer Metalllegierung und/oder Halbmetalllegierung, insbesondere dem mindestens einen in der Metallschicht oder Halbmetallschicht verwendeten Metall und/oder Halbmetall, gebildet.

In einer Ausführungsform wird die Polymer-Oxid-Kompositschicht aus mindestens einem Polymer, insbesondere dem mindestens einen in der Polymerschicht verwendeten Polymer, und einem oxidischen Material, beispielsweise Glas, Keramik, Metalloxid und/oder Glimmer, gebildet.

In einer Ausführungsform werden/wird die Polymerschicht, die Polymer-Metall-Kompositschicht und/oder die Polymer-Oxid-Kompositschicht aus einer Schmelze, Lösung oder Suspension durch Spritzverfahren, Befüllen und Entleeren, Flow-Coating, Dip-Coating oder Tauchung aufgebracht.

Der Druckbehälter kann insbesondere zur Speicherung von Wasserstoff oder anderen versprödenden Gasen (beispielsweise Methan) und Gasgemischen verwendet werden.

Vorzugsweise ist nach der Herstellung des Druckbehälters und/oder nach dem Aufbringen der Schichten keine Wärmebehandlung, insbesondere mit mehr als 300 °C vorgesehen, damit eine Härtung des Druckbehälters nicht verloren geht.

Vorzugsweise ist keine der Schichten als eine dehnbare Zwischenschicht ausgebildet.

Vorzugsweise ist keine der Schichten als SiOx-Schicht ausgebildet, da eine solche Schicht spröde und gasdurchlässig, insbesondere wasserstoffdurchlässig, ist.

Die Erfindung betrifft einen Druckbehälter, beispielsweise einen Stahlzylinder zum Aufbewahren von Wasserstoffgas, der aus nahtlosem oder geschweißtem Stahl gebildet sein kann, insbesondere für Wasserstoffdrücke bis 1000 bar. Der Druckbehälter weist eine Innenbeschichtung zur Vermeidung der Stahlversprödung durch Wasserstoff oder andere versprödende Gase (beispielsweise Methan) auf, durch die eine Reduktion der Wandstärke möglich ist. Der Druckbehälter kann in der Wasserstofftechnologie, insbesondere für den Wasserstofftransport sowie als stationärer Wasserstoffspeicher, eingesetzt werden, beispielsweise in der Energiewirtschaft oder als Behälter für wasserstoffbetriebene Straßen- oder Schienenfahrzeuge, insbesondere im Lastverkehr.

Ausführungsbeispiele der Erfindung werden im Folgenden anhand einer Zeichnung näher erläutert.

Darin zeigt:

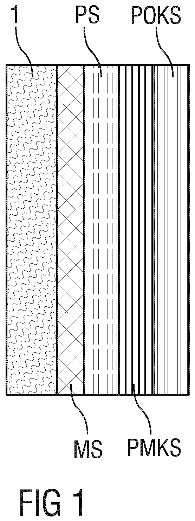

- Figur 1: eine schematische Schnittansicht einer Wandung eines Druckbehälters, wobei die Wandung aus Stahl gebildet ist und auf einer Innenseite der Wandung eine bis vier oder mehr Schichten angeordnet sind.

Die vorliegende Erfindung schlägt einen materialminimierten Druckbehälter, beispielsweise einen Stahlbehälter, für die Speicherung und den Transport von Wasserstoff für stationäre und/oder ortsbewegliche Anwendungen, einschließlich Automobil- und Schwerlastbereich, vor, wobei der Materialeinsatz für den Druckbehälter durch dünnere Wände gegenüber dem Stand der Technik verringert sein kann. Der Druckbehälter ist insbesondere eine wiederbefüllbare Flasche aus Stahl, beispielsweise mit einem Volumen von 0,5 l bis 450 1. Der Druckbehälter kann in unterschiedlichen Ausführungen und mit unterschiedlichen Formen konkaver oder konvexer Enden (insbesondere Böden und/oder Köpfe) ausgebildet sein. Ebenso sind sogenannte Doppelhalsflaschen möglich. Die Druckgasbehälter sind dabei beispielsweise so ausgebildet, dass sie trotz der hohen mechanischen Belastung beim Lastwechsel (Befüllen, Entleeren) über ihren Lebenszyklus eine geforderte Stabilität beibehalten.

Zunächst wird eine Stahlflasche, beispielsweise eine hochfeste Stahlflasche aus einem hochlegierten Sonderstahl mit einem optionalen nachgelagerten Verfestigungsprozess, beispielsweise Autofrettage, gefertigt. Die Stahlflasche wird in ihrem Inneren mit einer organischen und/oder anorganischen oder hybriden Beschichtung ausgerüstet. Damit wird die Behältersicherheit gegenüber Wasserstoffkorrosion nicht wie bisher üblich durch die erhöhte Wanddicke des Behälters sichergestellt, sondern es wird ein vergleichsweise dünnwandiger Druckbehälter mit einer ausreichend wasserstoffundurchlässigen Barrierebeschichtung bereitgestellt.

Die Beschichtung kann eine oder mehrere unterschiedliche Schichten, insbesondere zwei, drei, vier oder mehr Schichten aufweisen, die in unterschiedlicher Reihenfolge im Inneren des Druckbehälters abgeschieden werden können.

Figur 1 ist eine schematische Schnittansicht einer Wandung 1 des Druckbehälters. Die Wandung 1 ist aus Stahl, insbesondere einem hochlegierten Sonderstahl, gebildet. Auf einer Innenseite der Wandung 1 sind eine bis vier oder mehr Schichten MS, PS, PMKS, POKS angeordnet. Die Schicht kann eine Metallschicht MS, eine Polymerschicht PS, eine Polymer-Metall-Kompositschicht PMKS oder eine Polymer-Oxid-Kompositschicht POKS sein. Bei Verwendung von zwei, drei, vier oder mehr Schichten können beliebige Kombinationen aus einer Metallschicht MS, einer Polymerschicht PS, einer Polymer-Metall-Kompositschicht PMKS und eine Polymer-Oxid-Kompositschicht POKS vorgesehen sein.

Die Metallschicht MS kann aus einem Metall, Halbmetall oder einer Metall- bzw. Halbmetalllegierung mit sehr geringer Wasserstoffdurchlässigkeit ausgebildet sein, beispielsweise aus Silber (Ag), Aluminium (Al), Gold (Au), Germanium (Ge), Kupfer (Cu), Molybdän (Mo), Wolfram (W), Platin (Pt) und/oder Nickel (Ni). Die Metallschicht MS kann auch aus einer geeigneten Legierung bestehen wie zum Beispiel Inconel oder Cu0,47Pd0,53. Diese Metallschicht MS kann beispielsweise mittels eines elektrochemischen Verfahrens, eines Plasmaverfahrens, eines Sputterverfahrens, einer chemischen Reaktion wie Versilberung oder als Chemisch-Nickel-Schicht abgeschieden werden. Insbesondere Aluminium, Silber, Gold, Kupfer und Nickel sind sehr duktil und zeigen einen hohen Widerstand gegenüber Wasserstoffdiffusion, insbesondere wenn die Schichten defektfrei aufgebracht werden.

Die Polymerschicht PS kann aus einem Polymer, Polymerblend oder einem vernetzen Harz gebildet sein, welches sich durch geringe Wasserstoffdiffusion auszeichnet. Das Polymer ist beispielsweise aus der Gruppe der Thermoplaste ein Polyamid, ein Polyethylenterephthalat, ein HD-Polyethylen, ein Polyvinylchlorid, ein Polyvinylfluorid und/oder ein Polyvinylidendifluorid, Polychlortrifluorethylen wie Halar^{®}, Parylen, ein Polyphenylensulfid oder ein Epoxidharz. Die Polymerschicht PS kann mindestens einen Stoff aus der Gruppe der Duroplaste, z. B. ein Polypyrrol, und aus der Gruppe der Elastomere, z. B. Fluorelastomere wie Viton^{®}, aufweisen. Polymerblends werden aus mischbaren Polymeren der genannten Gruppen gebildet. Polymere Harze können beispielswiese Epoxidharze, Polyurethan sowie thiolbasierte Systeme sein. Polyamide, insbesondere fluorierte Polymere, weisen einen relativ geringen Wasserstofffluss und hohe Elastizität auf. Ferner kann in der Polymerschicht PS auch mindestens ein Additiv enthalten sein, beispielsweise ein Weichmacher.

Die Polymer-Metall-Kompositschicht PMKS kann aus einem Polymer, insbesondere dem in der Polymerschicht PS verwendeten Polymer, gegebenenfalls mit mindestens einem Additiv, beispielsweise einem Weichmacher, und einem Metall oder Halbmetall oder einer Metalllegierung oder Halbmetalllegierung, insbesondere dem in der Metallschicht MS verwendeten Metall, gebildet sein. Das Polymer ist beispielsweise ein Polyamid, ein Polyethylenterephthalat, ein HD-Polyethylen, ein Polyvinylchlorid, ein Polyvinylfluorid und/oder ein Polyvinylidendifluorid oder ein Polymerblend oder ein Harzsystem, beispielsweise Epoxidharz. Das Metall kann beispielsweise Ag, Al, Au, Ge, Cu, und/oder Ni oder eine Legierung aus mehreren dieser Stoffe sein. Die Polymer-Metall-Kompositschicht PMKS kann beispielsweise ein aluminiumhaltiger Lack sein.

Die Polymer-Oxid-Kompositschicht POKS kann aus einem Polymer, insbesondere dem in der Polymerschicht PS verwendeten Polymer, gegebenenfalls mit mindestens einem Additiv, beispielsweise einem Weichmacher, und einem oxidischen Material, beispielsweise Glas, Keramik, Metalloxid und/oder Glimmer, gebildet sein. Das Polymer ist beispielsweise ein Polyamid, ein Polyethylenterephthalat, ein HD-Polyethylen (auch High-Density-Polyethylen oder Polyethelyn hoher Dichte genannt), ein Polyvinylchlorid, ein Polyvinylfluorid und/oder ein Polyvinylidendifluorid und/oder Epoxidharz. Die Polymer-Oxid-Kompositschicht POKS kann beispielsweise ein flexibles Polymer mit eingebetteten blättchenförmigen Oxidpigmenten (z. B. Glimmer) aufweisen.

Eine Schichtdicke der Metallschicht MS liegt beispielsweise im Bereich von 50 nm bis 500 µm, bevorzugt im Bereich von 100 nm bis 400 µm und besonders bevorzugt im Bereich von 120 nm bis 200 µm.

Eine Schichtdicke der Polymerschicht PS liegt im Bereich von 50 µm bis 5 mm, bevorzugt im Bereich von 0,25 mm bis 4 mm und besonders bevorzugt im Bereich von 0,5 mm bis 2 mm.

Die Anteile anorganischer Komponenten in der Polymer-Metall-Kompositschicht PMKS und/oder der Polymer-Oxid-Kompositschicht POKS liegen im Bereich von 5 Ma.% bis 85 Ma.%, bevorzugt im Bereich von 20 Ma.% bis 80 Ma.% und besonders bevorzugt im Bereich von 40 Ma.% bis 80 Ma.%. Die Füllstoffe, das heißt die Partikel aus den Metallen und/oder Halbmetallen und/oder Oxiden, weisen beispielsweise eine plättchenförmige Struktur mit nano- bis mikrometergroßen Abmessungen, insbesondere mit Partikelgrößen im Bereich von 30 nm bis 100 µm, bevorzugt im Bereich von 100 nm bis 80 µm und besonders bevorzugt im Bereich von 0,5 µm bis 60 µm, auf. Durch Einbettung der plättchenförmigen Füllstoffe in möglichst hoher Dichte lässt sich der Wasserstofffluss im Polymer weiter verringern, da so der Diffusionsweg in der Barriereschicht erheblich erhöht wird.

In einer weiteren Ausführungsform kann zusätzlich oder anstelle einer der anderen Schichten eine Metall-Oxid-Schicht, das heißt eine Kompositschicht aus einem Metall und einem Oxid, vorgesehen sein. Beispielsweise könnte als Metall Nickel verwendet werden, da es sich über stromlose Verfahren einfach aufbringen lässt und dehnbar ist. Dabei könnten Oxidpartikel, beispielsweise plättchenförmige Oxidpartikel, in das Nickel eingebettet sein.

Bevorzugt wird ein Schichtsystem in einer der folgenden Reihenfolgen verwendet:
- MS, PS, PMKS, POKS,
- MS, PS, POKS, PMKS,
- MS, PMKS, PS, POKS,
- MS, PMKS, POKS, PS,
- MS, POKS, PS, PMKS,
- MS, POKS, PMKS, PS,
- MS, PS, POKS,
- MS, POKS, PS,
- MS, PMKS, POKS,
- MS, POKS, PMKS,
- MS, PMKS.

Die Polymerschicht PS, die Polymer-Metall-Kompositschicht PMKS und/oder die Polymer-Oxid-Kompositschicht POKS können beispielsweise aus einer Schmelze, Lösung oder Suspension durch Spritzverfahren, Dip-Coating, Tauchung (Befüllen und Entleeren) aufgebracht werden. Die jeweilige Schicht verfestigt sich dabei durch Abkühlung oder Trocknung oder eine direkte chemische Reaktion (z. B. eine Epoxidharzaushärtung).

Die beschriebenen, dünnen Beschichtungen schützen den Stahl der Wandung 1 vor einer übermäßigen Penetration mit Wasserstoff und so vor einer Versprödung. Die so gebildeten Barriereschichten machen eine Erhöhung der Wandstärke der Druckbehälter daher unnötig.

Im Vergleich mit derzeit üblichen Druckstufen von 300 bar können durch die erfindungsgemäße Lösung Druckbehälter mit gleicher Wanddicke und gleichem Materialeinsatz für beispielsweise 500 bar Betriebsdruck bereitgestellt werden. Verglichen mit den bisherigen Produkten am Markt ist mit der erfindungsgemäßen Lösung eine Drucksteigerung (und damit eine Erhöhung der Menge an gespeicherten Wasserstoff) um bis zu 60 % oder eine Wanddickenreduzierung und Materialminimierung um 30 % bis 50 % möglich.

Durch den Einsatz hochlegierter Stähle wird eine Möglichkeit geschaffen, deutlich bessere Werkstoffeigenschaften zu generieren. Die erheblich reduzierten Wanddicken werden über signifikant höhere Streckgrenzen und Zugfestigkeiten erzeugt. So kann beispielsweise die Zugfestigkeit von 950 N/mm² auf mindestens 1250 N/mm² erhöht werden.

Die Wasserstoffdiffusion und die damit verbundene wasserstoffinduzierte Stahlversprödung des Druckbehälters wird durch die Beschichtung eliminiert oder verringert. Die beschriebene Beschichtung ermöglicht die erläuterte Leichtbauweise und erlaubt durch die Wirkung als Wasserstoff-Sperre eine ökonomisch sinnvolle Nutzungsdauer des Druckbehälters bei gleichzeitiger erheblicher Reduzierung von Gewicht-, Material- und Energieeinsatz im Herstellungsprozess sowie nahezu vollständiger nachhaltiger Recyclingfähigkeit und optimierter CO₂-Bilanz mit entsprechender Schonung der Ressourcen.

Der nahtlose Hochdruckstahlbehälter ohne die Wasserstoffbarrierebeschichtung kann auch für nicht versprödend wirkende Gase und unter Druck verflüssigte Gase eingesetzt werden.

Die beschriebenen anorganischen und/oder organischen Barriereschichten und deren Herstellungsprozesse sind auch auf andere Applikationen, wie die Nutzbarmachung von Rohrleitungen, insbesondere Gasleitungen, Ventilen, Verbundapparaturen für Wasserstoffanwendungen, geeignet.

In einer beispielhaften Ausführungsform ist der Druckbehälter als ein Wasserstoffspeicher mit einem Volumen von 50 1, der auch im Bündel verbaut werden kann, ausgebildet und weist einen Betriebsdruck von beispielsweise 350 bar, 500 bar, 700 bar, 750 bar oder 1000 bar auf. Der Außendurchmesser des Druckbehälters kann beispielsweise 229 mm betragen. Der Druckbehälter kann beispielsweise in Speicheranlagen bei Elektrolyse, in Tankstellen oder bei Gefahrguttransporten (H₂-Trailer) verwendet werden.

In einer weiteren beispielhaften Ausführungsform kann der Druckbehälter für Wasserstofftanksysteme, Kfz- oder Schwerlastmobilität, auch im Verbund mehrerer Einzelflaschen zu Gesamtspeichersystemen verwendet werden. Ein Außendurchmesser des Druckbehälters kann beispielsweise 114 mm betragen. Der Betriebsdruck kann beispielsweise 700 bar oder 750 bar oder 1000 bar betragen.

Bei dem für die Speicherung von Gefahrgutbündeln üblichen Flaschen mit einem Einzelspeichervolumen von 50 1 ist durch die Steigerung der Zugfestigkeit von 950 N/mm² auf ca. 1250 N/mm², eine Reduzierung der Wanddicke von 18 mm auf ca. 9,5 mm sowie eine Materialreduzierung von 160 kg bis 250 kg auf 90 kg möglich.

Durch den innovativen, modularen Ansatz aus Stahlflasche und Beschichtungskombination wird die Behältersicherheit gegenüber Wasserstoffkorrosion nicht durch die erhöhte Wanddicke des Behälters sichergestellt, sondern ein vergleichsweise dünnwandiger Behälter mit ausreichend wasserstoffundurchlässiger Barrierebeschichtung bereitgestellt.

Besonders vorteilhaft gegenüber den sogenannten Typ IV-Zylindern (Liner aus kohlefaserummanteltem Kunststoff) lässt sich der erfindungsgemäße Druckbehälter fast vollständig recyceln, die Wasserstoffdiffusionsrate und damit der Treibhauseffekt sind geringer. Ferner ergibt sich eine einfache Möglichkeit zur Durchführung von Wiederholungsprüfungen.

Damit stellt die Erfindung einen wesentlichen Beitrag zur dezentralen, nichtleitungsgebundenen Wasserstoffversorgung dar, indem die Produkte nicht nur zur Speicherung von Wasserstoff bei der Elektrolyse, sondern auch zum Transport des Wasserstoffs zum Verwendungsort und dort wiederrum zur Zwischenspeicherung (z. B. Tankstelle) genutzt werden können.

Durch den verringerten Materialverbrauch entstehen somit auch erhebliche Einsparungen in der CO₂-Bilanz, im Gasverbrauch, der benötigten Wärmemenge und elektrischen Energie im Herstellungsprozess. Von wesentlicher Bedeutung ist zudem die Gewichtsreduzierung des Ladegewichts beim Gefahrguttransport.

Ferner kann die erfindungsgemäße Technologie auf andere Druckbehälterabmessungen und Gasarten skaliert werden. Da Wasserstoff das kleinste Molekül darstellt, kann ein Technologietransfer der Beschichtung und deren Barriereeigenschaften auf Behälter zur Speicherung und zum Transport anderer korrosiv wirkender Gase erfolgen.

In einer Ausführungsform kann vorgesehen sein, die Beschichtung in Form eines Ballons aufzubringen.

### BEZUGSZEICHENLISTE

- 1: Wandung
- MS: Schicht, Metallschicht
- PMKS: Schicht, Polymer-Metall-Kompositschicht
- POKS: Schicht, Polymer-Oxid-Kompositschicht
- PS: Schicht, Polymerschicht

## Patentansprüche

1. Druckbehälter, aufweisend eine Wandung (1) aus Stahl, wobei die Wandung (1) des Druckbehälters in dessen Innerem mit einer oder mehreren unterschiedlichen Schichten (MS, PS, PMKS, POKS), insbesondere zwei, drei, vier oder mehr Schichten (MS, PS, PMKS, POKS), zur Verringerung von Wasserstoffdiffusion und/oder zur Vermeidung des direkten Kontaktes eines im Druckbehälter zu haltenden Gases zur Wandung aus Stahl versehen ist.

2. Druckbehälter nach Anspruch 1, wobei die eine oder mehrere Schichten (MS, PS, PMKS, POKS) eine Metallschicht (MS) oder Halbmetallschicht und/oder eine Polymerschicht (PS) und/oder eine Polymer-Metall-Kompositschicht (PMKS) und/oder eine Polymer-Oxid-Kompositschicht (POKS) und/oder eine MetallOxidschicht umfasst/umfassen.

3. Druckbehälter nach Anspruch 2, wobei die Metallschicht (MS) oder Halbmetallschicht ein Metall und/oder ein Halbmetall oder eine Metall- beziehungsweise Halbmetalllegierung, insbesondere umfassend mindestens einen der Stoffe Silber, Aluminium, Gold, Germanium, Kupfer, Molybdän, Wolfram, Platin und Nickel, aufweist.

4. Druckbehälter nach einem der Ansprüche 2 oder 3, wobei die Polymerschicht (PS) ein Polyamid und/oder ein Polyethylenterephthalat und/oder ein HD-Polyethylen und/oder ein Polyvinylchlorid und/oder ein Polyvinylfluorid und/oder ein Polyvinylidendifluorid und/oder ein Polychlortrifluorethylen und/oder Parylen und/oder ein Polyphenylensulfid und/oder ein Polypyrrol und/oder ein Fluorelastomer und/oder Epoxidharz und/oder Polyurethan und /oder ein thiolbasiertes System aufweist.

5. Druckbehälter nach einem der Ansprüche 2 bis 4, wobei eine Schichtdicke der Metallschicht (MS) im Bereich von 50 nm bis 500 µm, bevorzugt im Bereich von 100 nm bis 400 µm und besonders bevorzugt im Bereich von 120 nm bis 250 µm, liegt und/oder wobei eine Schichtdicke der Polymerschicht (PS) im Bereich von 50 µm bis 5 mm, bevorzugt im Bereich von 0,25 mm bis 4 mm und besonders bevorzugt im Bereich von 0,5 mm bis 2 mm, liegt.

6. Druckbehälter nach einem der Ansprüche 2 bis 5, wobei die Polymer-Metall-Kompositschicht (PMKS) aus mindestens einem Polymer, insbesondere dem mindestens einen in der Polymerschicht (PS) verwendeten Polymer, und einem Metall oder Halbmetall oder einer Metalllegierung oder Halbmetalllegierung, insbesondere dem mindestens einen in der Metallschicht (MS) verwendeten Metall oder Halbmetall, gebildet ist und/oder wobei die Polymer-Oxid-Kompositschicht (POKS) aus mindestens einem Polymer, insbesondere dem mindestens einen in der Polymerschicht (PS) verwendeten Polymer, und einem oxidischen Material, beispielsweise Glas, Keramik, Metalloxid und/oder Glimmer, gebildet ist.

7. Druckbehälter nach einem der Ansprüche 2 bis 6, wobei anorganische Komponenten in der Polymer-Metall-Kompositschicht (PMKS) und/oder der Polymer-Oxid-Kompositschicht (POKS) mit einem Anteil im Bereich von 5 Ma.% bis 85 Ma.%, bevorzugt im Bereich von 20 Ma.% bis 80 Ma.% und besonders bevorzugt im Bereich von 40 Ma.% bis 80 Ma.%, vorliegen.

8. Druckbehälter nach einem der Ansprüche 2 bis 7, wobei das Metall und/oder das Halbmetall und/oder das Oxid als Partikel mit einer plättchenförmigen Struktur mit nano- bis mikrometergroßen Abmessungen, insbesondere mit Partikelgrößen im Bereich von 30 nm bis 100 µm, bevorzugt im Bereich von 100 nm bis 80 µm und besonders bevorzugt im Bereich von 0,5 µm bis 60 µm, vorliegen.

9. Druckbehälter nach einem der Ansprüche 2 bis 8, wobei die Schichten (MS, PS, PMKS, POKS) in einer der folgenden Reihenfolgen auf der Wandung (1) angeordnet sind:
- Metallschicht (MS), Polymerschicht (PS), Polymer-Metall-Kompositschicht (PMKS), Polymer-Oxid-Kompositschicht (POKS),
- Metallschicht (MS), Polymerschicht (PS), Polymer-Oxid-Kompositschicht (POKS), Polymer-Metall-Kompositschicht (PMKS),
- Metallschicht (MS), Polymer-Metall-Kompositschicht (PMKS), Polymerschicht (PS), Polymer-Oxid-Kompositschicht (POKS),
- Metallschicht (MS), Polymer-Metall-Kompositschicht (PMKS), Polymer-Oxid-Kompositschicht (POKS), Polymerschicht (PS),
- Metallschicht (MS), Polymer-Oxid-Kompositschicht (POKS), Polymerschicht (PS), Polymer-Metall-Kompositschicht (PMKS),
- Metallschicht (MS), Polymer-Oxid-Kompositschicht (POKS), Polymer-Metall-Kompositschicht (PMKS), Polymerschicht (PS),
- Metallschicht (MS), Polymerschicht (PS), Polymer-Oxid-Kompositschicht (POKS),
- Metallschicht (MS), Polymer-Oxid-Kompositschicht (POKS), Polymerschicht (PS),
- Metallschicht (MS), Polymer-Metall-Kompositschicht (PMKS), Polymer-Oxid-Kompositschicht (POKS),
- Metallschicht (MS), Polymer-Oxid-Kompositschicht (POKS), Polymer-Metall-Kompositschicht (PMKS),
- Metallschicht (MS), Polymer-Metall-Kompositschicht (PMKS).

10. Verfahren zur Herstellung des Druckbehälters nach einem der vorhergehenden Ansprüche, wobei der Druckbehälter aus Stahl geformt und in seinem Inneren mit einer oder mehreren unterschiedlichen Schichten (MS, PS, PMKS, POKS), insbesondere zwei, drei, vier oder mehr Schichten (MS, PS, PMKS, POKS), versehen wird.

11. Verfahren nach Anspruch 10, wobei die eine oder mehrere Schichten (MS, PS, PMKS, POKS) eine Metallschicht (MS) oder Halbmetallschicht und/oder eine Polymerschicht (PS) und/oder eine Polymer-Metall-Kompositschicht (PMKS) und/oder eine Polymer-Oxid-Kompositschicht (POKS) umfasst/umfassen.

12. Verfahren nach Anspruch 11, wobei die Metallschicht (MS) oder Halbmetallschicht aus mindestens einem Metall und/oder mindestens einem Halbmetall, insbesondere umfassend mindestens einen der Stoffe Silber, Aluminium, Gold, Germanium, Kupfer, Molybdän, Wolfram, Platin und Nickel, gebildet wird und/oder wobei die Metallschicht (MS) oder Halbmetallschicht mittels eines elektrochemischen Verfahrens, eines Plasmaverfahrens, eines Sputterverfahrens, eines stromlosen chemischen Verfahrens, insbesondere Versilberung oder chemisch Nickel, oder aus einer Metallschmelze abgeschieden wird.

13. Verfahren nach einem der Ansprüche 10 bis 12, wobei die Polymerschicht (PS) durch mindestens ein Polymer, umfassend ein Polyamid und/oder ein Polyethylenterephthalat und/oder ein HD-Polyethylen und/oder ein Polyvinylchlorid und/oder ein Polyvinylfluorid und/oder ein Polyvinylidendifluorid und/oder ein Polychlortrifluorethylen und/oder Parylen und/oder ein Polyphenylensulfid und/oder ein Polypyrrol und/oder ein Fluorelastomer und/oder Epoxidharz und/oder Polyurethan und/oder ein thiolbasiertes System, gebildet wird und/oder wobei die Polymer-Metall-Kompositschicht (PMKS) aus mindestens einem Polymer, insbesondere dem mindestens einen in der Polymerschicht (PS) verwendeten Polymer, und einem Metall und/oder Halbmetall oder einer Metalllegierung und/oder Halbmetalllegierung, insbesondere dem mindestens einen in der Metallschicht (MS) oder Halbmetallschicht verwendeten Metall und/oder Halbmetall, gebildet wird und/oder wobei die Polymer-Oxid-Kompositschicht (POKS) aus mindestens einem Polymer, insbesondere dem mindestens einen in der Polymerschicht (PS) verwendeten Polymer, und einem oxidischen Material, beispielsweise Glas, Keramik, Metalloxid und/oder Glimmer, gebildet wird.

14. Verfahren nach einem der Ansprüche 10 bis 13, wobei die Polymerschicht (PS), die Polymer-Metall-Kompositschicht (PMKS) und/oder die Polymer-Oxid-Kompositschicht (POKS) aus einer Schmelze, Lösung oder Suspension durch Spritzverfahren, Befüllen und Entleeren, Flow-Coating, Dip-Coating oder Tauchung aufgebracht werden/wird.

15. Verwendung des Druckbehälters nach einem der Ansprüche 1 bis 9 zur Speicherung versprödender Gase, insbesondere Wasserstoff oder Methan, oder von Gasgemischen.
